# EUROPÄISCHE PATENTSCHRIFT

(11) **EP 0 452 249 B1**
(45) Veröffentlichungstag und Bekanntmachung des Hinweises auf die Patenterteilung: **01.06.1994**
(21) Anmeldenummer: 91710005.9
(22) Anmeldetag: 09.03.1991
(51) Int. Cl.: G01D 9/30, G01D 15/10

(54) **Kurvenschreibgerät**
Chart recorder
Appareil enregistreur

(30) Priorität: 12.04.1990 EP 90810296
(43) Veröffentlichungstag der Anmeldung: 16.10.1991
(73) Patentinhaber: ENDRESS + HAUSER WETZER GmbH + Co. KG, D-87481 Nesselwang (DE)
(72) Erfinder: Kalteis, Helmut, Dipl.-Ing., W-8952 Marktoberdorf (DE); Schmidt, Dieter, Dipl.-Ing., W-8964 Nesselwang (DE)
(74) Vertreter: Morstadt, Volker, Dipl.-Ing.

(56) Entgegenhaltungen:
- DE-A- 3 200 238
- US-A- 3 971 041
- PATENT ABSTRACTS OF JAPAN, vol. 6, no. 212 (P-151)(1090), 26 Oktober 1982, & JP-A-57 118113
- PATENT ABSTRACTS OF JAPAN, vol. 6, no. 27 (P-102)(905), 17. Februar 1982, & JP-A-56 147010
- PATENT ABSTRACTS OF JAPAN, vol. 7, no. 10 (P-168)(1155), 14. Januar 1983, & JP-A-57 169616

## Beschreibung

Die Erfindung besteht nach dem Wortlaut des Anspruchs 1 in einem Kurvenschreibgerät mit n (n = 1, 2, 3....) Meßkanälen für jeweils eines von n zu registrierenden Meßsignalen, mit einer Druckvorrichtung, die auf einem an ihr vorbeibewegten Aufzeichnungsträger n gleichfarbige, jeweils zu einem der n Meßsignale gehörende Punktfolgen als Meßkurven erzeugt, und mit 1 bis n Schreibvorrichtungen für 1 bis n verschiedene Farben, die eine oder mehrere der Punktfolgen mit einer dem Meßsignal des jeweiligen Kanals folgenden durchgehenden Linie einer anderen der n Farben mindestens stückweise überschreibt oder unterlegt, oder mit einer Farbdruckvorrichtung für n verschiedene Farben, die ausgewählte Punkte jeder Meßkurve mit Farbpunkten einer anderen der n Farben markiert.

Die Anmelderin produziert und verkauft unter dem Gerätenamen "MEGA-LOG" ein Kurvenschreibgerät, bei dem eins bis sechs Meßkanäle für jeweils eines von sechs zu registrierenden Meßsignalen vorgesehen sind. Es hat eine Druckvorrichtung, die als zur Erzeugung der Punkte kurzzeitig aktivierter bzw. elektrisch angesteuerter, feststehender Thermokamm ausgebildet ist, der auf einem an ihm vorbeibewegten thermoempfindlichen Registrierpapier (Thermopapier) als Aufzeichnungsträger eins bis sechs gleichfarbige, nämlich schwarze, jeweils zu einem der sechs Meßsignale gehörende Punktfolgen als Meßkurven erzeugt, deren Punkte im allgemeinen so dicht liegen, daß sie als kontinuierliche Linie erscheinen.

Der Thermokamm besteht aus einer Vielzahl längs der Papierbreite nebeneinander angeordneter, das Registierpapier dauernd berührender Punkt-Wärmequellen, denen zur Erzeugung der zu einem Meßkanal gehörenden Punktfolge pro Punkt ein kurzer Stromimpuls zugeführt wird.

Die zu einem einzelnen Kanal gehörende Punktfolge wird dabei von denen der anderen Kanäle dadurch unterschieden, daß mittels des Thermokamms Kanalnummern, also alphanumerische Zeichen, in regelmäßigen Abständen neben der entsprechenden Punktfolge auf dem Thermopapier erzeugt werden. Der Thermokamm erzeugt ferner ein oder mehrere kanalzugehörige Linien-Raster zur signalbeurteilung und - vermessung.

Die Ausbildung und die Anwendung von Thermokämmen bei Kurvenschreibgeräten sind an sich auch in der US-A 39 71 041 beschrieben.

Die Anmelderin verkauft unter dem Gerätenamen "CHROMA-LOG L" ferner ein Kurvenschreibgerät, bei dem mittels eins bis drei als Tintenfedern für ein bis drei verschiedene Farben ausgebildeten Schreibvorrichtungen drei Meßsignale auf Thermopapier als kontinuierliche Farblinie registriert werden können. Mittels eines über das Thermopapier hin und her beweglichen alphanumerischen Thermokopfes werden zusätzliche Angaben, wie z.B. Datum, Uhrzeit, Meßbereich, Meßwerte, Einheit der Meßgröße, Linien-Raster etc., auf dem Thermopapier erzeugt; die Registrierung von Meßkurven der Meßsignale mittels des alphanumerischen Thermokopfes ist nicht vorgesehen und auch nicht möglich.

Schließlich wird von der Anmelderin unter dem Gerätenamen "CHROMA-LOG P" ein Kurvenschreibgerät als Farbpunktschreiber verkauft, bei dem mittels sechs Farbfedern für sechs verschiedene Farben einer als Druckstern ausgebildeten Farbdruckvorrichtung sechs Meßsignale auf Thermopapier nichtkontinuierlich registriert werden können. Mittels eines über das Thermopapier hin und her beweglichen alphanumerischen Thermokopfes werden auch hier zusätzliche Angaben, wie z.B. Datum, Uhrzeit, Meßbereich, Meßwerte, Einheit der Meßgröße, Linien-Raster etc., auf dem Thermopapier erzeugt; die Registrierung von Meßkurven der Meßsignale mittels des alphanumerischen Thermokopfes ist auch hier nicht vorgesehen und nicht möglich.

Die beiden eben geschilderten Kurvenschreibgeräte entsprechen, abgesehen von ihrer Mehrkanaligkeit, insoweit auch der in der JP-A 56-147 010 beschriebenen Anordnung, die einen Analog- und einen Digital-Registrierkopf, also einen alphanumerischen Registrierkopf, hat, die beide quer zum Aufzeichnungsträger längs einer geraden Führung hin und her bewegbar sind. Der Digital-Registrierkopf erzeugt nur die alphanumerischen Zeichen und der Analog-Registrierkopf nur die Meßkurve.

Herkömmliche, das Meßsignal meist farbig aufzeichnende, Kurvenschreibgeräte, wie z.B "CHROMA-LOG P" bzw. "CHROMA-LOG L", haben u.a. den Nachteil, daß der Farbvorrat der Tinten- bzw. Farbfedern zu Ende gehen kann, ohne daß dies bemerkt wird, und daß daher die Meßkurven u.U. erheblich lange Lücken haben können. Dies ist jedoch, insb. bei der gefährliche Situationen überwachenden Registrierung, nicht akzeptabel.

Dieser Nachteil läßt sich nach der einen Variante der Erfindung dadurch beheben, daß die Punktfolge bzw. die Farblinie mit einer dem Meßsignal des jeweiligen Kanals folgenden durchgehenden Linie mindestens stückweise unterlegt oder überschrieben wird. Dies wird durch die zusätzlich zur mechanischen Schreibvorrichtung vorhandene Druckvorrichtung erreicht, die im Gegensatz zu den bei den eingangs erläuterten Kurvenschreibgeräten "CHROMA-LOG P" bzw. "CHROMA-LOG L" vorhandenen Aufzeichnungsarten der Meßsignale ebenso wie die Schreibvorrichtung vom Meßsignal angesteuert wird.

Die Erfindung ermöglicht es ferner, den geschilderten herkömmlichen Punktschreibern, wie z.B. "CHROMA-LOG P" anhaftende Nachteile zu beheben. Diese das Meßsignal meist mittels bewegter Schreibvorrichtungen registrierenden Punktschreibgeräte erzeugen auf dem Aufzeichnungsträger in Abhängigkeit vom Meßsignal eine Folge von mehr oder weniger dicht liegenden Punkten, deren Zusammenschau durch den Betrachter die Meßkurve ergibt. Dabei ist die Punktdichte nicht nur von der Vorschubgeschwindigkeit des Aufzeichnungsträgers, sondern auch von der Anzahl der pro Zeiteinheit erzeugten Punkte abhängig. Da zur Erkennung von Kurvendetails die Vorschubgeschwindigkeit entsprechend gewählt wird, liegen die Punkte u.U. so weit auseinander, daß eine sichere Kurvenergänzung durch den Betrachter nicht mehr möglich ist. Ferner ist nicht auszuschließen, daß zwischen zwei Punkten eine so kurzzeitige Meßsignaländerung aufgetreten ist, daß sie nicht registriert wird.

Ein Vorteil der Erfindung besteht hinsichtlich des Gerätes "MEGA-LOG" darin, daß die von der Druckvorrichtung in Form des Thermokamms einfarbig erzeugten Punktfolgen der Meßsignale anstatt nur mittels alphanumerischer Zeichen markiert nun mittels einer bestimmten Farbe mindestens stückweise überschrieben werden können. Das oben erläuterte Ausgehen des Farbstoffs ist nunmehr irrelevant, da die Meßkurven ja von der Druckvorrichtung ohne Unterbrechung erzeugt werden.

Ein anderer Vorteil der Erfindung besteht hinsichtlich der Geräte "CHROMA-LOG P" bzw. "CHROMA-LOG L" darin, daß die Tinten- bzw. Farbfedern nunmehr die Meßsignale nicht dauernd zu registrieren brauchen, sie also nicht mehr die (Haupt-) Meßkurven erzeugen, sondern daß vielmehr die Druckvorrichtung, z.B. in Form des Thermokamms, nun sowohl die alphanumerischen Zeichen etc. als auch die Meßsignale aufzeichnet und es somit, wie bereits erwähnt, irrelevant ist, wann oder wenn der Farbstoff der Tinten- bzw. Farbfedern ausgeht.

Hat das Kurvenschreibgerät der Erfindung nicht nur einen, wie bei dessen einfachster Realisierung möglich, sondern mehrere Meßkanäle, so ergeben sich weitere Vorteile. Bei mehreren Meßkanälen können nämlich je nach Amplitude der zu registrierenden Meßsignale die Punktfolgen sich so nahe kommen, daß sie sich berühren oder sogar überschneiden, so daß es, insb. bei schleifendem Schnitt, für den Betrachter schwierig werden kann zu entscheiden, welche der vor und hinter dem Berührungs- oder Schnittpunkt liegenden Punktfolgen zusammengehören, also die Meßkurve eines bestimmten Meßsignals bilden.

Durch die unterschiedlich farbige, mindestens stückweise Linienmarkierung nach der Erfindung ist die Zugehörigkeit einer Meßkurve zum Meßsignal eines bestimmten Meßkanals eindeutig erkennbar.

Ein weiterer Vorteil der gemeinsamen Anwendung der die Punktfolge(n) erzeugenden Druckvorrichtung zusammen mit der (einen) Schreibvorrichtung oder den (mehreren) Schreibvorrichtungen besteht darin, daß mittels derjenigen der beiden Vorrichtungen, die die niedrigere mechanische Grenzfrequenz hat, der ungefilterten Meßkurve eine hochfrequenzgefilterte Meßkurve überlagert werden kann. Dadurch kann die insb. bei Kompensations-Linienschreibvorrichtungen u.U. nachteilige Eigenschaft niedriger Grenzfrequenz zur Registrierung des gefilterten Meßsignals gleichzeitig mit dem ungefilterten Meßsignal gezielt ausgenutzt werden.

Nach der zweiten Variante der Erfindung läßt sich die eindeutige Erkennbarkeit der sich überschneidenden Punktfolgen auch dadurch erreichen, daß mittels einer Farbdruckvorrichtung ausgewählte Punkte der einzelnen Meßkurven mit Farbpunkten markiert werden, wobei die den einzelnen Meßkurven zugeordneten Farben voneinander verschieden sind.

Nach einer Abwandlung der Erfindung kann mindestens eine der n Farbfedern der Farbdruckvorrichtung oder mindestens eine der n Schreibvorrichtungen durch ein weiteres zu registrierendes Meßignal angesteuert sein, so daß nicht nur n, sondern mindestens n+1 Meßsignale registriert werden können.

Wenn in Ausgestaltung dieser Abwandlung das weitere Meßsignal aus einem der n Meßsignale durch eine eindeutige Umformoperation hervorgegangen ist, können interessante Teile einer Punktfolge hervorgehoben, z.B. vergrößert dargestellt, werden; dabei ist die Umformoperation im Falle dieser Vergrößerung eine Multiplikation mit konstantem Faktor. Andere mathematische Umformungen, wie z.B. Quadrierung, Wurzelbildung, Differenzierung, Integrierung, Differenzbildung mit einem anderen der n Meßsignale etc., sind ebenfalls möglich. Auf diese Art können z.B. die Darstellung und die erleichterte Analyse der Ein- und Ausgangsgrößen eines Prozesses oder eines Regelprozesses ermöglicht werden.

In den Figuren der Zeichnung, die nun näher erläutert werden, ist perspektivisch und teilweise schematisiert lediglich der mechanische Aufbau von Kurvenschreibgeräten nach der Erfindung anhand verschiedener Ausführungsbeispiele dargestellt, da die elektrische und elektronische Ausbildung der Meßkanäle von üblicher Art sein kann, wie sie z.B. in den genannten Geräten vorhanden sind.
- Fig. 1 bis 3: zeigen verschiedene Registriermöglichkeiten der ersten Ausführungsvariante der Erfindung mit Druckvorrichtung und zusätzlicher Schreibvorrichtung,
- Fig. 4: zeigt eine Abwandlung der Anordnung nach den Fig. 1 bis 3, und
- Fig. 5 und 6: zeigen verschiedene Registrierungsmöglichkeiten der zweiten Ausführungsvariante der Erfindung mit Druckvorrichtung und zusätzlicher Farbdruckvorrichtung.

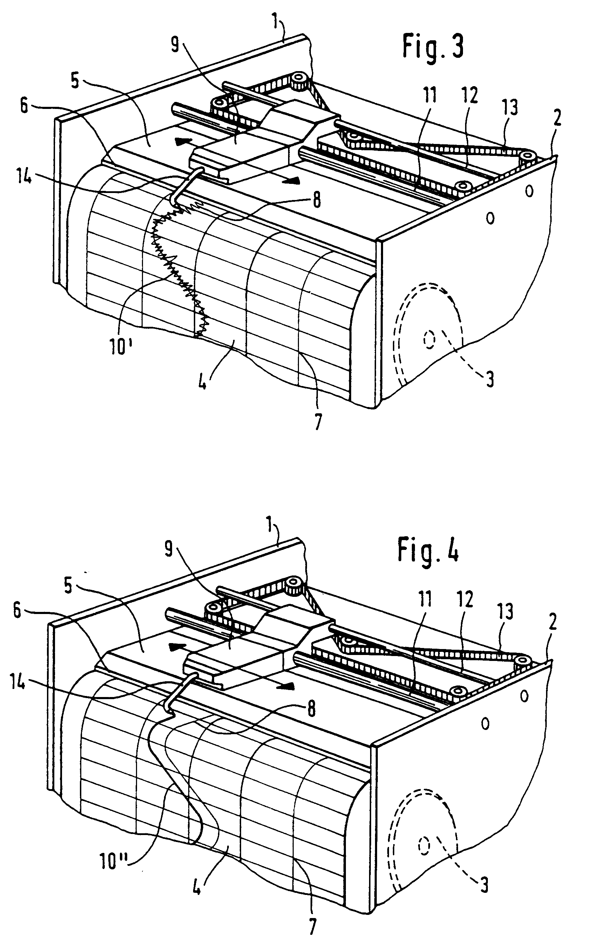

In den Figuren sind gleiche Teile mit denselben Bezugszeichen versehen, und es ist jeweils aus Gründen der zeichnerischen Übersichtlichkeit die Anwendung der Erfindung bei der Registrierung eines einzigen Meßsignals - ausgenommen Fig. 4 - gezeigt, die eingangs erwähnte Laufzahl n ist hier also gleich eins. Ferner sind nur diejenigen Teile des Kurvenschreibgeräts ausschnittsweise dargestellt, die für die Erfindung und deren Verständnis wesentlich sind.

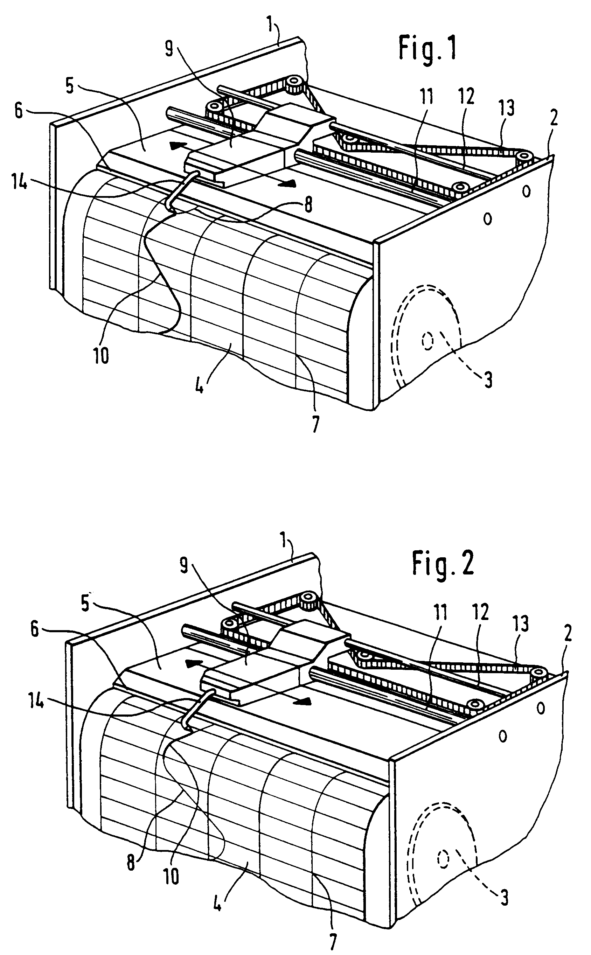

Das Kurvenschreibgerät der Fig. 1 umfaßt zwei Seitenplatten 1, 2, zwischen denen die übrigen Teile untergebracht sind und die auch zu deren Lagerung und Halterung dienen. Hierzu gehört eine Druckwalze 3, über die hinweg ein Aufzeichnungsträger 4 in Form eines Thermopapiers gezogen wird, z.B. dadurch, daß die Druckwalze 3 sich dreht. Oberhalb der Druckwalze 3 ist eine Druckvorrichtung 5 in Form eines oben erwähnten Thermokamms angebracht, dessen dicht nebeneinander liegende Punkt-Wärmequellen 6 in den Figuren als durchgehende schwarze Linie gezeichnet sind.

Die Druckvorrichtung 5 erzeugt auf dem Aufzeichnungsträger 4 sowohl ein Raster 7 als auch in Abhängigkeit von einem Meßsignal eine Punktfolge 8, deren Punkte in Fig. 1 so dicht liegen, daß sie als durchgehende Linie gezeits sind. Die Punktfolge 8 wird mittels einer Schreibvorrichtung 9 überschrieben, die ebenfalls vom Meßsignal angesteuert ist. Dies ergibt eine Meßlinie 10.

Die Schreibvorrichtung 9 ist, wie durch den horizontalen Doppelpfeil angedeutet ist, über der gesamten Breite des Aufzeichnungsträgers 4 beweglich gelagert und mittels zweier Stangen 11, 12 geführt. Der horizontale Antrieb erfolgt über einen Zahnriemen 13, der über die gezeigten Zahnrollen geführt ist, von denen mindestens eine motorisch gedreht ist. Über den Aufzeichnungsträger 4 gleitet eine Schreibfeder 14, die mit einem Tintenreservoir verbunden ist, so daß die die Punktfolge 8 überschreibende Linie 10 deren Punkte verbindet.

In Fig. 2 ist gezeigt, daß das Überschreiben mit der Linie 10 auch nur ausschnittsweise durch Abheben der Schreibvorrichtung 9 erfolgen kann. Dies kann z.B. nur dann vorgenommen werden, wenn besonders interessante Kurventeile markiert werden sollen oder müssen, insb. wenn Grenzwerte überschritten werden. Die ausschnittsweise Markierung kann also insb. zur Alarmmeldung dienen.

In Fig. 3 ist gezeigt, wie und daß mittels der überschreibenden Linie 10′ eine von höherfrequenten Signalanteilen befreite Aufzeichnung erfolgt, die im Meßsignal und damit in der Punktfolge 8 enthalten sind. Aufgrund der mechanischen Trägheit der Schreibvorrichtung 9 und/oder durch (zusätzliche) elektrische oder berechnete Filterung in deren Ansteuerschaltkreis sind die höherfrequenten Signalanteile in der von der Schreibfeder gezogenen Linie 10′ nicht enthalten.

In Fig. 4 ist gezeigt, daß nach der erwähnten Abwandlung der Erfindung die Schreibvorrichtung 9, anstatt mit dem zur Punktfolge 8 gehörenden Meßsignal angesteuert zu werden, auch ein weiteres Meßsignal registrieren kann. In Ausgestaltung dieser Abwandlung ist nach Fig. 4 ein durch eine Umformoperation aus dem zur Punktfolge 8 gehörenden Meßsignal - hier durch einfache konstante Multiplikation - hervorgegangenes Signal als Meßlinie 10" dargestellt.

Sollen bei den Anordnungen nach den Fig. 1 bis 4 mehr als ein Meßsignal aufgezeichnet werden, sollen nach dem der Erfindung zugrundeliegenden Prinzip also Mehrkanal-Kurvenschreibgeräte realisiert werden, so ist pro Meßkanal je eine Schreibvorrichtung 9 vorzusehen, deren konstruktive Ausbildung im Bereich der Schreibfedern 14 so gewählt wird, daß sie sich gegenseitig nicht behindern, also über- oder untereinander vorbeibewegbar sind, wie dies bei dem eingangs erwähnten Kurvenschreibgerät "chroma-log L" auch realisiert ist.

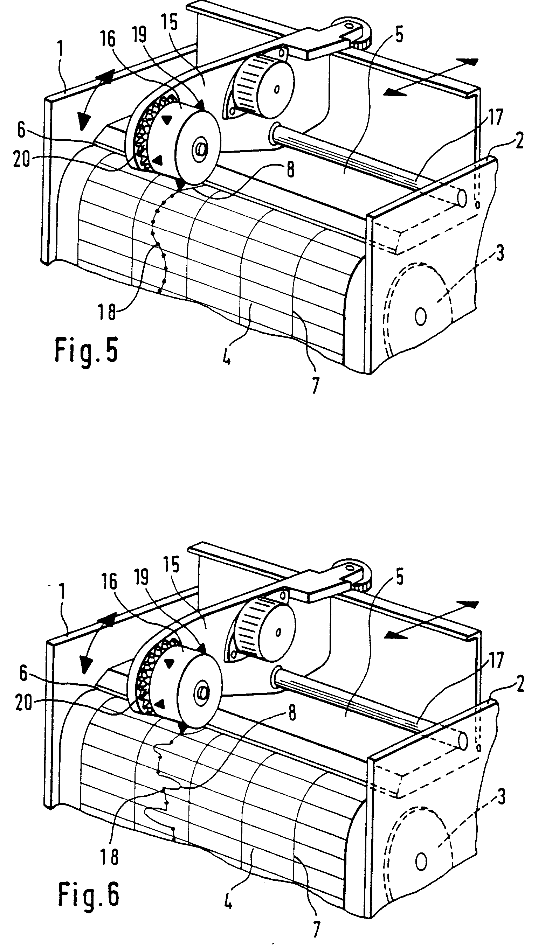

Das Kurvenschreibgerät der Fig. 5 zeigt die andere Variante der Erfindung. Anstatt der Schreibvorrichtung 9 nach den Fig. 1 bis 4 ist eine Farbdruckvorrichtung 15 vorgesehen. Sie umfaßt u.a. einen Druckstern 16 und ist um die Achse 17 drehbar und darauf verschiebbar gelagert. Durch Hin- und Herbewegung kann der Druckstern 16 positioniert und dann auf den Aufzeichnungsträger 4 gesetzt und wieder davon abgehoben werden, so daß die Punktfolge 8, die wiederum von den Punkt-Wärmequellen 6 der Druckvorrichtung 5 erzeugt wird, mit Farbpunkten 18 markiert werden kann.

Auf der Umfangsfläche des Drucksterns 16 sind n Farbfedern 19 angeordnet, deren jede eine von denen der übrigen verschiedene Farbe abgibt. Ferner hat der Druckstern 16 einen Zahnkranz 20, über den die einzelne Farbfeder 19 in eine Lage gebracht werden kann, in der auf den Aufzeichnungsträger 4 die Farbpunkte 18 gesetzt werden. Diese Lage ist in Fig. 5 diejenige, in der eine der Farbfedern 19 sich senkrecht über dem Aufzeichnungsträger 4 befindet.

Während in Fig. 5 eine Betriebsweise gezeigt ist, die dem vollständigen Überschreiben der Punktfolge 8 nach Fig. 1 vergleichbar ist - es wird nämlich eine Folge von Farbpunkten 18 gesetzt -, zeigt Fig. 6 eine Betriebsweise, die mit der anhand der Fig. 3 erläuterten vergleichbar ist. In Fig. 6 ist die verbindende Linie allerdings die Punktfolge 8 selbst, die dem Meßsignal schneller folgt als die Registrierung durch die Farbpunkte 18, die nur niederfrequente Anteile des Meßsignals darstellen; die Funktion von Druckvorrichtung 5 und Farbdruckvorrichtung 15 ist also gegenüber der entsprechenden Funktion bei Fig. 5 vertauscht, da die mechanische Grenzfrequenz der Farbdruckvorrichtung 15 im allgemeinen kleiner ist als die der Druckvorrichtung 5, insb. wenn diese der erwähnte Thermokamm ist.

## Patentansprüche

1. Kurvenschreibgerät
- mit n (n = 1, 2, 3...) Meßkanälen für jeweils eines von n zu registrierenden Meßsignalen,
- mit einer Druckvorrichtung (5), die auf einem an ihr vorbeibewegten Aufzeichnungsträger (4) n gleichfarbige, jeweils zu einem der n Meßsignale gehörende Punktfolgen (8) als Meßkurven erzeugt, und
- mit 1 bis n Schreibvorrichtungen (9) für 1 bis n verschiedene Farben, die eine odere mehrere der Punktfolgen (8) mit einer dem Meßsignal des jeweiligen Kanals folgenden durchgehenden Linie (10) einer anderen der n Farben mindestens stückweise überschreibt oder unterlegt, oder
- mit einer Farbdruckvorrichtung (15) für 1 bis n verschiedene Farben, die ausgewählte Punkte jeder Meßkurve mit Farbpunkten (18) einer anderen der n Farben markiert.

2. Kurvenschreibgerät nach Anspruch 1 mit Ansteuerung von mindestens einer der n Farben der Farbdruckvorrichtung (15) oder mindestens einer der n Schreibvorrichtungen (9) durch mindestens ein weiteres zu registrierendes Meßsignal.

3. Kurvenschreibgerät nach Anspruch 2, bei dem das weitere Meßsignal aus einem der n Meßsignale durch eine eindeutige Umformoperation entstanden ist.

## Claims

1. A chart recorder comprising
- n (n = 1, 2, 3, ...) measuring channels, one for each of n measurement signals to be recorded,
- a printing device (5) which produces n isochromatic dot sequences (8) as curves each associated with one of the n measurement signals on a recording medium (4) moving past it,
- 1 to n writing devices (9) for 1 to n different colors which overwrite or underwrite one or more of the dot sequences (8), at least in sections, with a continuous line (10) of another one of the n colors which follows the measurement signal of the respective channel, or
- a color-printing device (15) for 1 to n different colors which marks selected dots of each curve with dots (18) of another one of the n colors.

2. A Chart recorder as claimed in claim 1 wherein at least one of of the n colors of the color-printing device (15) or at least one of of the n writing devices (9) is selcted by at least one additional measurement signal to be recorded.

3. A Chart recorder as claimed in claim 2 wherein the additional measurement signal is derived from one of the measurement signals by an unambiguous transforming operation.

## Revendications

1. Appareil traceur de courbes,
- comportant n (n = 1, 2, 3 ...) canaux de mesure dont chacun est destiné à l'un de n signaux de mesure à enregistrer,
- comportant un dispositif d'impression (5) qui, sur un support d'impression (4) déplacé devant lui, engendre, en tant que courbes de mesure, n suites de points (8) de même couleur, correspondant chacune à l'un des n signaux de mesure,
- comportant 1 à n dispositifs d'écriture (9) pour 1 à n couleurs différentes, qui retracent ou soulignent, au moins par tronçons, l'une ou plusieurs des suites de points (8), par une ligne continue (10) qui suit le signal de mesure du canal considéré, et est d'une autre des n couleurs, ou
- comportant un dispositif d'impression de couleur (15) pour 1 à n couleurs différentes, qui marque des points sélectionnés de chaque courbe de mesure, par des points de couleur (18) d'une autre des n couleurs.

2. Appareil traceur de courbes selon la revendication 1, comprenant la commande d'au moins une des n couleurs du dispositif d'impression de couleur (15), ou d'au moins l'un des n dispositifs d'écriture (9), par au moins un autre signal de mesure à enregistrer.

3. Appareil traceur de courbes selon la revendication 2, dans lequel l'autre signal de mesure est obtenu à partir de l'un des n signaux de mesure, par une opération de conversion univoque.
